(19) Europäisches Patentamt / European Patent Office / Office européen des brevets

(11) **EP 3 897 204 B1**

(12) **EUROPEAN PATENT SPECIFICATION**

(45) Date of publication and mention
of the grant of the patent:
**08.06.2022  Bulletin 2022/23**

(21) Application number: **19806252.3**

(22) Date of filing: **25.11.2019**

(51) International Patent Classification (IPC):
*A23L 29/256* *(2016.01)*    *A23L 27/00* *(2016.01)*
*A23L 27/23* *(2016.01)*    *A23L 23/10* *(2016.01)*

(52) Cooperative Patent Classification (CPC):
**A23L 23/10; A23L 27/23; A23L 27/88;**
**A23L 29/256**

(86) International application number:
**PCT/EP2019/082368**

(87) International publication number:
**WO 2020/126319 (25.06.2020 Gazette 2020/26)**

(54) **FOOD COMPOSITION**

LEBENSMITTELZUSAMMENSETZUNG

COMPOSITION ALIMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **19.12.2018  EP 18213846**

(43) Date of publication of application:
**27.10.2021  Bulletin 2021/43**

(73) Proprietor: **Unilever IP Holdings B.V.**
**3013 AL Rotterdam (NL)**

(72) Inventors:
• **SAILER, Winfried**
**74074 Heilbronn (DE)**
• **SCHÄNZEL, Monika, Renate**
**74074 Heilbronn (DE)**

• **SCHMIDT, Istvàn**
**74074 Heilbronn (DE)**
• **TOTH, Marcell, Läszlö**
**74074 Heilbronn (DE)**

(74) Representative: **van den Brom, Coenraad Richard**
**Unilever N.V.**
**Unilever Patent Group**
**Bronland 14**
**6708 WH Wageningen (NL)**

(56) References cited:
**WO-A1-2008/151850    WO-A1-2008/151852
WO-A1-2008/151854    WO-A1-2012/062919
WO-A1-2012/084843    WO-A1-2014/009079
WO-A2-2008/151851**

## Description

### Field of the invention

The present invention relates to food compositions for preparing a bouillon, broth, soup, sauce, gravy or for use as a seasoning. More in particular, the invention relates to such compositions in the form of a gel.

### Background of the invention

Food compositions for preparing a bouillon, broth, soup, sauce, gravy, or for use as seasoning are well known in the western and non-western cooking. For brevity, such formulations are herein all abbreviated to "compositions for preparing a bouillon", or "bouillon compositions".

Conventionally, bouillon compositions comprise ingredients such as one or more of salt, sugar, flavour enhancers (like e.g. monosodium glutamate, MSG), herbs, spices, vegetable particulates, colourants, flavourants, fat and/or oil. Salt is usually an ingredient which is present in large amounts, e.g. 5-60%.

The most common physical formats in which such compositions are available are powders, granulates and cubes or tablets. The powders can be prepared by mixing all ingredients in the proper proportion, optionally followed by granulating to obtain granulates using equipment known in the art. The conventional bouillon and seasoning cubes are prepared by mixing the ingredients, followed by pressing to a cube. Alternatively, cubes or tablets can be prepared by mixing all ingredients followed by extruding and cutting the extrudate. The powders and granulates are generally offered in sachets or jars, the cubes usually individually wrapped and packed in a box.

Liquid compositions for bouillons, soups, sauces etcetera do also exist. They have the advantage that e.g. liquid extracts or compositions of herbs, vegetables, meat etcetera can be included. There is a desire for compositions for preparing a bouillon, broth, soup, sauce, gravy, or for use as seasoning, which combine some advantages of liquid compositions (e.g. allowing the use of ingredients which are not fully dried) with some advantages of dry compositions (e.g. unit dosing).

JP 61/031 ,068 discloses soup compositions for use with instant noodles, which soup composition is in the form of a jelly, which composition needs to be diluted 5-6 times with water to yield a soup to be consumed or served with noodles. Said jellies are formed with gelatin in combination with one or more of alginate, agar and apple puree. The jellies take 3-6 minutes to dissolve. The jellies disclosed have some disadvantages.

Dry instant products often have an appearance which is considered non-fresh. Several patent applications describe ambient stable savoury compositions in the form of a gel at a high salt content.

WO2007/068484, WO2007/068482, WO2008/151850, WO2008/151851, WO08151852. These applications disclose food compositions in the form of a gel wherein xanthan gum is combined with a galactomannan such as locust bean gum, tara gum, guar gum, or cassia gum. WO2012/062919 discloses products with a gelling system comprising iota- carrageenan and xanthan gum. These compositions have the disadvantage that xanthan gum is perceived by consumers as a non-natural ingredient.

WO2007/068402, WO2007/068483 disclose products wherein a gelling system is used comprising starch and gelatin. The starch is gelatinised to contribute to the gelling system and is required in high amounts.

WO2O12/084843 discloses products comprising amidated low-methoxy pectin as a gelling system.

WO2014009079 describes a product comprising water, sodium salt and optionally potassium salt in a total amount of from 5 wt.% to 40 wt.%, gelling pectin, being all pectin with a DE below 55%, wherein gelling pectin is dissolved in the water, calcium salt and non-gelatinised starch.

WO2008/151854 describes compositions relying on a gelling system with modified starch. The modified starch is gelatinised to form the gelling system and is required in high amounts.

There is a need for food compositions for use as seasoning or for preparing a bouillon, broth, soup, sauce, or gravy, which composition is in the form of a (packaged) jelly, which jelly can dissolve in boiling water within reasonable time (e.g. a mass of 28 g would dissolve in 1000 ml boiling water in less than 2 minutes, preferably less than 1 minutes).

It is also preferred that such a gel is not too rigid or too sticky gel so that removal from its packaging is facilitated.

Also, it is desired that preferably the gel is easy to manufacture (e.g. not too viscous in preparation yet not too liquid to avoid separation of ingredients or requiring more complex equipment or processing).

### Summary of the invention

Surprisingly, the above-mentioned problems were, at least partially, solved by a food composition in the form of a gel comprising a structured aqueous phase containing 5'-ribonucleotides and salt, the food composition comprising:

a) at least 50 wt.% water, by weight of the total food composition;

b) 10 to 40 wt.% salt, by weight of the total water content of the food composition; preferably wherein the salt is selected from NaCl, KCl and mixtures thereof;

c) 0.5 to 5 wt.% 5'-ribonucleotides, by weight of the total food composition, said 5'-ribonucleotides being selected from guanosine monophosphate (5'-GMP), adenosine monophosphate (5'-AMP), inosine monophosphate (5'-IMP), cytidine monophosphate (5'-CMP), uridine monophosphate (5'-UMP), salt of the 5'-ribonucleotides and combinations thereof;

d) 0 to 50 wt.% taste imparting components from the group consisting of plant pieces, vegetable pieces, meat particulates and combinations thereof,

wherein the food composition has a pH less than 7.

It has been surprisingly found that a food composition comprising a structured aqueous phase containing 5-ribonucleotides and salt is able to provide a shape-stable gel composition that has excellent dissolution properties. In addition, the presence of 5-ribonucleotides as structuring agent is that ribonucleotides meet the consumer needs for food compositions having natural ingredients.

The invention further relates to the use of a food composition as defined herein to prepare a soup, sauce or gravy.

In another aspect, the invention relates to a process for the preparation of a food composition comprising:

a) providing water, salt and 5-ribonucleotides or a source thereof and optionally combining these with other food ingredients,

b) heating the mixture,

c) filling the mixture in a container, as set out in the appended claims.

**Detailed description of the invention**

Food composition

The food composition of the present invention is in the form of a gel. Preferably, the gel is a self-sustaining gel. The gel is preferably a semi-solid gel. The gel is not a paste. A semi-solid gel is known to the person skilled in the art of gelled bouillon compositions. A gel as defined herein has a natural appearance to the consumer. Preferably, the gel texture allows the consumer of the food composition to remove the food composition from its packaging easily and in one piece. This is referred to in the field as unit dosing, an advantage shared with traditional, dry bouillon cubes. The gel, preferably self-sustaining, gel texture is present at least at room temperature (20 °C). The gel texture prevents that the food composition flows unlike a liquid or a paste, after or during removal from its packaging and allows it to maintain the shape, which at least to a certain extent reflects the shape the product had when present in its packaging, in this way allowing the desired unit-dosing. The gel texture is preferably not sticky such as a paste (for example tomato paste). The gel is preferably not very elastic, to allow easy deformation with for example a spoon when mixing in to a dish.

The term "gel" as used herein refers to a matrix formed by interaction of nucleotides, salt and water, which is free standing over a time scale of at least a few minutes. A gel will usually have a smooth surface appearance and be shape-retaining at ambient temperature when exposed to gravity.

In a "penetration test", a plunger is forced into a composition and the force required for penetration of the composition is plotted against the distance (or time) of penetration into the composition at a pre-determined speed to a pre-determined depth of penetration.

**Gel strength measurement:**

The gel strength measurement can be carried out using a Texture Analyser TA - XT2 plus (Stable Micro Systems Ltd) with a finger probe of 12.7mm diameter. The sample is filled in a plastic pot (diameter 50mm, height 72mm) and closed with a lid. The finger probe penetrates the sample 20mm in depth. The gel strength corresponds to the firmness. It is the force needed at breaking point of the gel.

|  | Measuring Program: |
|---|---|
| *Measuring tool:* | Cylindrical finger probe (12,7mm diameter) |
| *Mode:* | Measure Force in Compression |
| *Option:* | Return to Start |
| *Pre - Test Speed:* | 1,0 mm/s |
| *Test Speed:* | 0,5 mm/s |
| *Post - Test Speed:* | 10 mm/s |

(continued)

| | |
|---|---|
| *Distance:* | 20 mm |
| *Trigger Type:* | Auto - 0,5 g |

The measurements are performed after at least 24 hours of storage at 20°C.

Firmness: The food composition of the invention is not liquid but has a semi-solid texture with certain firmness. The firmness is determined as the maximum force (or breaking point) in the penetration first cycle (expressed in g). For a semi-solid gel as in this invention, the maximum force (firmness) is typically, but not necessarily, observed as a breaking point before complete penetration depth (distance is less than the penetration dept, which is 10mm). In some cases, the maximum force (firmness) is typically, but not necessarily, observed as a breaking point after a steep increase in the force. In the composition of the present invention, the firmness (in g) is preferably higher 5 g, more preferably higher than 10 g, even more preferably higher than 20 g.

The firmness is preferably less than 100 g, more preferably less than 75 g, even more preferably less than 50 g.

Brittleness: Gels of the invention are preferably brittle gels. It is preferred that the gels have a certain brittleness so they are easy to disperse in the application. Brittleness is defined, for the purpose of this invention, as the distance of penetration until the maximum force is achieved (in millimetres) in the first penetration. For a semi-solid gel as in the present invention (i.e. brittle gels), that is typically observed at a breaking point, at a distance (in millimetres) less than the penetration depth defined (10 mm). Contrary to a semi-solid gel, a paste may be too sticky and is not brittle, it does not break. An elastic gel might also not break within the penetration depth imposed in the test (10mm). The gel of the invention is preferably not an elastic gel. In the composition of the present invention the brittleness is preferably less than 7 millimetres, most preferably less than 5 millimetres, even more preferably less than 2 millimeters.

The present invention relates to a food composition. A composition is a food product that is usually diluted before consumption. Preferably, the food composition is a savoury composition, that is a product that can be used to prepare for example a soup, a sauce, a gravy or a seasoned dish. Generally, such a product is diluted, for example in water, or in a dish, for example in a liquid dish or a in sauce or in a vegetable dish or a rice dish, to obtain a food product which is ready for consumption. In this way, it should be discriminated from a read-to-eat product, which is normally consumed as such, without dilution. To enable dilution of the composition of the present invention, the composition should be dispersed in hot water, preferably at for example 80 °C, more preferably at for example 95 °C.

Preferably a composition as defined herein with a size of 28 g disperses in 1000 ml water of 92 °C, using stirring, e.g. by using a wire whisk, in a time period of less than 3 minutes, more preferably less than 2 minutes, most preferably less than 1 minutes. This is the way a consumer would normally use the product of the invention.

The dissolving time can be suitably determined by conductivity measurement during the dissolution of a sample. With the dissolving of ionic constituents of the sample like e.g. NaCl, MSG etc. the conductivity increases until the sample is completely dissolved. At that point no further increase in conductivity can be observed. The results are given in sec. Such a measurement can be carried out as follows: The sample is added to hot water of 92°C. The conductivity during dissolving of the sample is measured until no further increase can be observed. The conductivity of a solution depends on:

- the number and charge of ions. The more ions a solution contains, the higher its conductivity.
- the ionic mobility in a general way. The mobility in turns depends on the type of ion, the solvent (the more polar a solvent, the more completely ionized are the compounds dissolved in it. Water is an ideal solvent for ionic compounds.)
- the temperature
- the viscosity (the ionic mobility decreases with increasing viscosity, thus conductivity decreases-than a higher dissolving time can be measured)
- the application of a sample in water (sample weight / water volume)

As their name implies, non-electrolytes do not conduct the electrical current and thus do not contribute to the electrical conductivity. Such substances dissolved in water are, for example, non-ionic surfactants, sugars and suspended oils. (Metrohm Application Bulletin 102/2e) The dissolving time is determined by evaluation of a conductivity curve. InoLab 740/ Level 3 active multifunction box Conductivity measurement can be performed with InoLab 740/ Level 3 active multifunction box with standard-conductivity cell TetraCon R 325.

Water

The food composition as defined herein comprises water. Typically, the food composition comprises 50 to 90 wt.% water. More preferably water is present in an amount of from 52 wt.% to 80 wt.%, more preferably of from 55 wt.% to 70 wt.%. Water is representing here the total water content of the food composition (i.e. not only water added as an ingredient per se but also the water of hydration associated with ingredients of the food composition).

The water activity of the product is preferably of between 0.60 and 0.95, more preferably of between 0.65 and 0.90 even more preferably between 0.70 and 0.90, even more preferably between 0.75 and 0.85. The Aw can preferably be between 0.6 and 0.8.

Salt

The food composition comprises 10 to 40 wt.% salt, by weight of the total water content of the food composition. Preferably the food composition comprises sodium salt, preferably NaCl and optionally potassium salt (preferably KCl) in a total amount of from 10 wt.% to 40 wt.% , more preferably of from 11 wt.% to 37 wt.%, even more preferably of from 12 wt.% to 35 wt.%, even more preferably of from 13 wt.% to 30 wt.%, most preferably of from 15 to 27 wt.%, most preferably 17 to 25 wt.%, based on the total water content of the food composition.

The amount of salt is calculated as standard in the art and is according to the following formula: ((weight of salt) / (weight of salt + weight of total water content)) <*>100. For example, 5 g salt in 20 g total water content results in an amount of salt of 20 wt.% on total water content. When preparing the composition food composition of the invention, this amount of salt can be added during preparation.

Sodium salt, preferably NaCl, is preferably present in an amount of from 10 wt.% to 40 wt.%, preferably of from 12 wt.% to 35 wt.%, more preferably of from 15 to 25 wt.%, based on the total water content of the composition food composition. It might be preferred that in addition to sodium salt, preferably NaCl, the food composition comprises a potassium salt (preferably KCl).

5'-ribonucleotides

The food composition comprises 0.5-5 wt.% 5'-ribonucleotides, by weight of the total food composition.

The term "ribonucleotides" is herein intended to refer to either the free 5'-ribonucleotides or salts thereof. The 5'-ribonucleotides may be provided as ingredients themselves or be provided by an ingredient that is a source of 5'-ribonucleotides. Preferably, the 5-ribonucleotides are provided by yeast extract, bacteria extract or seaweed extract, preferably by yeast extract.

5-ribonucletides (also referred to as nucleotides) as used herein refers to guanosine monophosphate (5'-GMP), adenosine monophosphate (5'-AMP), inosine monophosphate (5'-IMP), cytidine monophosphate (5-CMP), uridine monophosphate (5'-UMP), wherein the 5 -IMP in the mixture is obtained by partial or complete conversion of 5'-AMP into 5'-IMP, and the salts thereof. Preferably, the amount of 5-ribonucleotides present in the savoury composition is defined as the sum of guanosine monophosphate (5'-GMP; salt free), adenosine monophosphate (5'-AMP; salt free) and inosine monophosphate (5'-IMP; salt free).

Preferably, the 5'-ribonucleotides comprise at least 0.25 wt.% guanosine monophosphate, more preferably, the 5'-ribonucleotides comprise at least 0.5 wt.% guanosine monophosphate, even more preferably at least 0.75 wt.% 5-ribonucleotides, most preferably at least 1.0 wt.% guanosine monophosphate, based on the total weight of the composition.

Preferably, the 5'-ribonucleotides comprise guanosine monophosphate in the range of 0.25 to 15 wt.%, more preferably, guanosine monophosphate in the range of 0.5 to 10 wt.%, even more preferably in the range of 0.75 to 8 wt.%, most preferably in the range of 1 to 6 wt.%, based on the total weight of the composition.

Preferably, the 5'-ribonucleotides comprise at least 0.25 wt.% inosine monophosphate, more preferably the 5'-ribonucleotides comprise at least 0.5 wt.% inosine monophosphate, even more preferably at least 0.75 wt.% 5-ribonucleotides, most preferably at least 1.0 wt.% inosine monophosphate, based on the total weight of the composition.

Preferably, the 5'-ribonucleotides comprise inosine monophosphate in the range of 0.25 to 15 wt.%, more preferably, inosine monophosphate in the range of 0.5 to 10 wt.%, even more preferably in the range of 0.75 to 8 wt.%, most preferably in the range of 1 to 6 wt.%, based on the total weight of the composition.

The 5'-ribonucleotides preferably comprises guanosine monophosphate and inosine monophosphate in the range of 0.5 to 15 wt.%, more preferably in the range of 0.75 to 10 wt.%, even more preferably in the range of 1 to 8 wt.%, based on the total weight of the composition.

Typically, the composition according to the invention comprises 0.5 to 5 wt.% 5'-ribonucleotides, based on the total weight of water present in the composition. Preferably, the composition according to the invention comprises 0.7 to 4 wt.% 5'-ribonucleotides, more preferably 1 to 3 wt.% 5'-ribonucleotides, based on the total weight of water present in the composition. By "total water" is meant free water and bound water present in other food ingredients. The 5-ribonucleotide content of the present savoury composition may be represented as an amount relative to the total composition, as defined above, or as an amount relative to the total water content, as defined below.

Preferably, the 5'-ribonucleotides comprise at least 0.25 wt.% guanosine monophosphate, more preferably, the 5'-ribonucleotides comprise at least 0.5 wt.% guanosine monophosphate, even more preferably at least 0.75 wt.% 5-ribonucleotides, most preferably at least 1.0 wt.% guanosine monophosphate, based on the total weight of water present in the composition.

Preferably, the 5'-ribonucleotides comprise guanosine monophosphate in the range of 0.25 to 15 wt.%, more preferably, guanosine monophosphate in the range of 0.5 to 10 wt.%, even more preferably in the range of 0.75 to 8 wt.%, most preferably in the range of 1 to 6 wt.%, based on the total weight of water present in the composition.

Preferably, the 5'-ribonucleotides comprise at least 0.25 wt.% inosine monophosphate, more preferably the 5'-ribonucleotides comprise at least 0.5 wt.% inosine monophosphate, even more preferably at least 0.75 wt.% 5-ribonucleotides, most preferably at least 1.0 wt.% inosine monophosphate, based on the total weight of water present in the composition.

Preferably, the 5'-ribonucleotides comprise inosine monophosphate in the range of 0.25 to 15 wt.%, more preferably, inosine monophosphate in the range of 0.5 to 10 wt.%, even more preferably in the range of 0.75 to 8 wt.%, most preferably in the range of 1 to 6 wt.%, based on the total weight of water present in the composition.

The 5'-ribonucleotides preferably comprises guanosine monophosphate and inosine monophosphate in the range of 0.5 to 15 wt.%, more preferably in the range of 0.75 to 10 wt.%, even more preferably in the range of 1 to 8 wt.%, based on the total weight of water present in the composition.

The term "yeast" as used herein, refers to an organism belonging to the *Saccharomycetaceae* family, preferably to the genus *Saccharomyces.* Yeast in the context of the present invention may be any kind of yeast.

The term "yeast extract" as used herein refers to a composition comprising water soluble components of the yeast cell, the composition of which is primarily 5'-ribonucleotides, amino-acids, peptides, carbohydrates and salts. Yeast extract is produced through the hydrolysis of peptide bonds by the naturally occurring enzymes present in edible yeast and/or or by the addition of food-grade enzymes (Food Chemical Codex), i.e. by autolysis or hydrolysis.

A yeast extract, in the context of the present invention, is synonymous with yeast hydrolysate or yeast autolysate, i.e. a soluble extract from yeast comprising hydrolysed protein that has elevated levels of ribonucleotides. Preferably, the yeast extract comprises at least 8 wt.% 5-ribonucleotides, preferably at least 12 wt.% 5-ribonucleotides. For example, suitable yeasts are SPRINGER(R) 2020 / 0-MG-L or SPRINGER(R) 2012 / 20-MG-L-AF available from Bio Springer. Preferably, the amount of guanosine monophosphate present in the yeast extract is at least 3 wt.%.

Preferably, the savoury composition comprises hydrolyzed yeast extract and/or nucleotide rich yeast extract. Typically, the savoury composition comprises (hydrolysed) yeast extract and/or nucleotide rich yeast extract in an amount of 5 to 40 wt,% more preferably 10 to 30 wt.%, even more preferably 12 to 25 wt.%, by weight of the total composition.

Preferably, the yeast extract comprises at least 8 wt.% 5'-ribonucleotides, by weight of dry matter of the yeast extract, even more preferably wherein the yeast extract comprises at least 3 wt.% guanosine monophosphate, by weight of dry matter of the yeast extract.

Taste imparting components

The food composition comprises 0 to 50 wt.% taste imparting components from the group consisting of plant pieces, vegetable pieces, meat particulates and combinations thereof.

In the compositions as defined herein, it is preferred that taste-imparting components are present. They may comprise one or more of hydrolysed proteins of vegetables-, soy-, fish-, or meat-origin, liquid or dissolvable extracts or compositions selected from the group consisting of meat, fish, crustaceans, herbs, fruit, vegetable and mixtures thereof; particles of meat; particles of fish; particles of crustaceans; particles of plant (e.g. herbs, vegetable, fruit); particles of fungi (e.g. mushroom); flavours and mixtures thereof. In the above, where it says "meat" this is preferably to be understood to comprise beef, pork, chicken (and other fowl).

Preferably the plant pieces comprise pieces selected from the group consisting of onion, garlic, leek, carrot, parsley, tomato and mixtures thereof. Preferably the amount of taste-imparting components as set out above is from 1 wt.% to 30 wt.% (by weight on the total composition). More preferred from 2 wt.% to 20 wt.%, even more preferably from 5wt.% to 10%.

Preferably, the amount of particles, preferably particles selected from the group of particles of meat, particles of fish, particles of crustaceans, particles of plant (e.g. herbs, vegetable, fruit), particle of fungi (e.g. mushroom) and mixtures thereof is from 0.5 wt.% to 30 wt.%, more preferably from 1 wt.% to 20 wt.%, even more preferably from 2 wt.% to 10 wt.% (by weight on the total food composition).

Fat

Fat may be present in the food composition as defined herein in relatively low amounts. Fat can be liquid fat or solid fat, at ambient temperature, such as for example at 20 °C. Preferably, a fat is one of the fats selected from the group consisting of chicken fat, pork fat, beef fat, and mixtures thereof. It can preferably be a fat selected from the group consisting of palm oil, sunflower oil, olive oil, rape seed oil and mixtures thereof. It can be a vegetable fat or an animal fat. Higher amounts are preferably prevented as they may interfere with the proper texture of the gel or may result in phase separation during storage or transport. Relatively high amounts of hard fat, such as e.g. saturated or hydrogenated fats may affect the desired gel texture, and therefore are not preferred. Relatively high amounts of liquid fat, such as for example oils which are liquid at room temperature, may have a weakening effect on the texture of the gel. Hence, preferably, the present invention relates to a food composition further comprising less than 15 wt.% of fat, preferably less than 10 wt.% of fat. In another preferred aspect, fat may be present in an amount of from 0.5 to 15 wt.% of fat, more preferably of from 1 to 10wt.% of fat, most preferably of from 3 to 10 wt.% of fat, based on the weight of the food composition. The amount of fat in the food composition is preferably as low as possible, for optimal stability. It may be preferred that fat is absent.

The food composition of the invention is a savoury food composition. Consequently, after dilution, the resulting product does preferably taste not sweet. The sugar content in the composition as defined herein is preferably lower than 30 wt.%, more preferably lower than 20 wt.%, even more preferably lower than 10 wt.%, more preferably lower than 15 wt.%, most preferably lower and 10 wt.%. It can be more than 1 %, preferably more than 5 wt.% based on the total weight of the composition. A suitable range could be of between 1 and 20 wt.%, preferably of from 3 to 15 wt.% based on the total weight of the composition. It may be preferred that the food composition is free from sugar or free from any added sugar. Sugar polyols could also provide a sweet taste to the product resulting after dilution. The consumer may not appreciate the presence of these compounds. Therefore, it could be preferred that the concentration of sugar polyols, for example liquid sugar polyols, is preferably less than 3 wt.%, preferably less than 1 wt.%, more preferably less than 0.5 wt.%, even more preferably less than 0.1 wt.%, or less than 0.05 wt.% based on the weight of the food composition. It could be preferred that the food composition does not contain any added sugar polyol or added liquid sugar polyol.

To contribute to the savoury character, the composition food composition of the present invention may further comprise a savoury taste enhancer selected from the group consisting of monosodium glutamate (MSG), organic acid and mixtures thereof. Savoury taste enhancer is preferably present in a total amount of less than 30 wt.%, more preferably of between 0.1 wt.% and 30 wt.%, preferably in an amount of from 1wt.% to 25 wt.%, most preferably in an amount of from 5wt.% to15 wt.%, based on the weight of the total food composition. An individual taste enhancer as mentioned above may be present in an amount of less than 30 wt.%, more preferably of between 0.1 wt.% and 30 wt.%, preferably in an amount of from 0.5 wt.% to 25 wt.%, most preferably in an amount of from 1 wt.% to15 wt.%, based on the weight of the total food composition.

Preferably, the composition comprises less than 1 wt.% mono sodium glutamate, preferably less than 0.5 wt.% monosodium glutamate.

The composition preferably comprises 0.1-3 wt.% galactomannan and/or glucomannan, preferably wherein the galactomannan is locust bean gum or guar gum.

It might be preferred that the food composition of the present invention comprises microbiological active ingredients, like preservatives or acids. Preservatives or acids may be for example lactic acids, potassium sorbate or benzoate.

As the compositions are gels, they can have a shape. Preferably, the composition as defined herein is in the form of a cube, tablet, brick-shape, pellet, ball (sphere), briquette, egg-shape, or flattened egg-shape. It is herein to be understood that "cubes or tablets" and "unit dose" encompass a wide variety of geometric shapes: next to cubes and tablets also pellets, briquettes, brick-like shapes, etcetera.

Each individual gelled composition preferably is of a size such that the composition has a weight (excluding packaging) of in the range of 1 to 10 kg, preferably 2 to 250 g, more preferably 10 to 50 g. The portion of the composition as defined herein packaged is preferably such that the composition has a weight excluding packaging) of 1 to 10 kg, preferably 2 to 250 g, more preferably 10 to 50 g.

The weight of the composition as defined herein is preferably more than 2 g, preferably more than 10 g, even more preferably more than 20 g, most preferably higher than 25 g and preferably less than 10 kg, more preferably less than 1 kg, even more preferably less than 500 g, even more preferably less than 300 g, even more preferably less than 100 g, most preferably less than 50 g. The relatively small formats showed optimal dispersion behaviour. In some cases, these formats are more easily removed from packaging than prior art gels.

Preferably, the food composition is a packaged composition, preferably having a mass in the range of 5 to 1000g, preferably, 10 to 800 g, more preferably 25 to 600 g, even more preferably 50 to 500 g, preferably wherein the packaged food composition is packaged in a container, said container preferably being containing multiple portions or a single portion, preferably said container being a single portion container.

The composition can also be a multi-dosing format, although the format is not limited to this. In this case the consumer can disperse only part of the composition of the invention in an appropriate amount of liquid, by for example using a spoon or other suitable utensil. In case of a multi-dose format, the weight of the composition can preferably be from 80 g to 1 kg, more preferably from 100 g to 850 g.

The packaging can be e.g. a blister pack or a glass or plastic jar or (sealed) tubs or cups. Preferably, in the packaged composition as defined herein the container is a cup or tub with a seal, but also more complex packaging shapes are now possible (e.g. a reclosable pack). A specific and preferred packaging option are sealed or reclosable cups or tubs (e.g. plastic cups e.g. having a volume of 1-250 ml, comprising 1-250 g, preferably 2-50 g (more preferably 10-50 g) composition, which are closed with a lid or seal, preferably a seal of sheet-like material).

The compositions described herein comprise sucrose in an amount of 0 to 20 wt. %, based on the total weight of the composition, preferably 1 to 15 wt.%, more preferably 2 to 10 wt.%. Preferably, the composition comprises less than 20 wt.% based on the total weight of the composition, more preferably less than 10 wt.%, even more preferably less than 5 wt.%.

Preferably, the packaged composition as defined herein (when taken out of the packaging) has the appearance or rheology of a gel. Preferably, the food composition has a firmness of above 5 g, preferably above 10 g, more preferably above 20 g, preferably less than 100 g, more preferably less than 75 g, more preferably less than 50 g. The firmness is equal to the force needed at breaking point of the gel, and is determined by penetrating a sample of the food composition up to a depth or 20 mm with a probe of 12.7 mm diameter at a speed of 0.5 mm/s.

The composition as defined herein is preferably shelf stable when in its intact packaging. This can be ensured by selecting the appropriate manufacturing process in combination with a correct composition. For example, a process involving a pasteurising step (either explicitly or as part of other process steps), followed by hot or aseptic filling of packaging, and the right water activity aw and pH of the composition may ensure such.

pH

The pH of the food composition of the invention (at room temperature, e.g. 20 °C and measured after at least one day of preparation) is preferably between 1 and 7, more preferably between 2 and 6. The pH is preferably higher than 3.5, preferably between 3.5 and 7, more preferably higher than 3.8, more preferably between 3.8 and 6, even more preferably higher than 4.0, even more preferably between 4.0 and 5.5. It could be preferred that the gelled food composition has a pH of lower than 3.5. The pH can be adjusted by edible acids or base, as known in the art. Suitable edible acids include citric acid, lactic acid, ascorbic acid, and malic acid. Preferably, the edible acid is citric acid.

Starch

Preferably, the food composition comprises 0.5-5 wt.% gelatinized starch component by weight of the total water content of the food composition, preferably 1-4,5 wt.% gelatinized starch component by weight of the total water content of the food composition, more preferably 2-4 wt.% gelatinized starch component by weight of the total water content of the food composition.

It is an advantage of the food composition comprising 0.5-5 wt.% gelatinized starch component that during production of the composition food composition sedimentation or floating of particles, floating of particles on top of the mixture or phase separation, e.g. according to a gradient, between a phase with a higher concentration of particles and a phase with a lower concentration of particles can be prevented, without the need of gums such xanthan. It can be preferred that the total amount of xanthan is very low, for example less than 0.2 wt.%, more preferably less than 0.1 wt.%, based on the weight of the total water content. Presence of these gums might be perceived as non-favourable by consumers.

Typically, the gelatinized starch component is a native starch preferably selected from the group consisting of potato starch, corn starch, pea starch tapioca, rice and mixtures thereof. More preferably the native starch is selected from the group consisting of potato, corn, and mixtures thereof, most preferably the native starch is potato starch.

The term "native starch" as used herein refers to starch recovered in the original form by extraction from any starch-bearing material.

The term "gelatinized starch" as used herein refers to starch that has undergone gelatinization. Starch gelatinization is a process that breaks down the intermolecular bonds of starch molecules in the presence of water and heat, allowing the hydrogen bonding sites to engage more water. Penetration of water increases randomness in the general starch granule structure and decreases the number and size of crystalline regions. Under the microscope in polarized light starch loses its birefringence and its extinction cross during gelatinization. Some types of unmodified native starches start swelling at 55 °C, other types at 85 °C. The gelatinization temperature depends on the degree of cross-linking of the amylopectin.

The food composition preferably comprises 0.5-30 wt.% ungelatinized starch component by weight of the total water content of the food composition. Preferably, the composition comprises less than 0.5 wt.% ungelatinized starch, most preferably the composition does not comprise ungelatinized starch.

Non-gelatinised starch can be both native starch or modified starch or a mixture thereof. Modified starch preferably is physically or chemically modified starch. Non-gelatinised starch is also described in literature as "unswollen starch". The non-gelatinised starch is in general composed of crystalline parts of amylopectin and amorphous amylose characterized by a birefringence, when seen under polarized light microscopy. When gelatinization occurs, starch granules gradually lose their birefringence, due to the disruption of their crystalline structure. This technique is well-known to the skilled person. Other techniques known in the art such as differential scanning calorimetry (DSC) or X-ray powder diffraction can also be used to analyse whether the starch is gelatinised or non-gelatinised.

Preferably, the food composition as defined herein comprises:

a) 50 to 70 wt.% water, by weight of the total food composition;
b) 10 to 25 wt.% salt, by weight of the total water content of the food composition; preferably wherein the salt is selected from NaCl, KCl and mixtures thereof;
c) 0.75 to 2.5 wt.% 5'-ribonucleotides, by weight of the total food composition;
d) 1 to 30 wt.% taste imparting components from the group consisting of plant pieces, vegetable pieces, meat particulates and combinations thereof,

wherein the food composition has a pH between 3.5 and 7.

Preferably, the food composition as defined herein comprises:

a) 50 to 70 wt.% water, by weight of the total food composition;
b) 10 to 25 wt.% salt, by weight of the total water content of the food composition; preferably wherein the salt is selected from NaCl, KCl and mixtures thereof;
c) 0.75 to 2.5 wt.% 5'-ribonucleotides, by weight of the total food composition;
d) 1 to 30 wt.% taste imparting components from the group consisting of plant pieces, vegetable pieces, meat particulates and combinations thereof,
e) 1 to 4.5 wt.% gelatinized starch component by weight of the total water content of the food composition,

wherein the food composition has a pH between 3.5 and 7.

In another aspect, the present invention relates to a process for the preparation of a food composition as specified herein before, said process comprising:

a) providing water, salt and 5-ribonucleotides or a source thereof and optionally combining these with other food ingredients, said 5'-ribonucleotides being selected from guanosine monophosphate (5'-GMP), adenosine monophosphate (5'-AMP), inosine monophosphate (5'-IMP), cytidine monophosphate (5'-CMP), uridine monophosphate (5'-UMP), salt of thee 5'-ribonucleotides and combinations thereof,
b) heating the mixture,
c) filling the mixture in a container.

After step c) the mixture is cooled. The cooling may be an active or passive cooling step.

Preferably, the 5-ribonucleotides are provided in the salt form of guanosine 5'-monophosphate (5'-GMP), adenosine 5'-monophosphate (5'-AMP), inosine 5'-monophosphate (5'-IMP), 5'-cytidine monophosphate (5-CMP), uridine 5'-monophosphate (5'-UMP), wherein the 5'-IMP in the mixture is obtained by partial or complete conversion of 5'-AMP into 5'-IMP.

Preferably, the 5'-ribonucleotides are provided in step a) as guanosine monophosphate disodium salt, adenosine 5'-monophosphate disodium salt, inosine 5'-monophosphate disodium salt, cytidine monophosphate disodium salt, uridine monophosphate disodium salt. 5'-ribonucleotides are preferably provided in step a) as a constituent of a yeast extract, seaweed extract or bacterial extract, preferably a yeast extract.

Preferably, the mixture provided in step a) is heated to at least 40°C, preferably at least 50 °C, more preferably at least 60°C, even more preferably at least 70°C, yet more preferably at least 80°C, even yet more preferably at least 90°C and most preferably at least 100°C.

Preferably, the mixture provided in step a) is heated to a temperature in the range of 40 to 100°C, preferably 50 to 90°C, more preferably 60 to 80°C. Typically the mixture is gently mixed during the heating step. The skilled person is aware of suitable mixing methods known in the art.

Preferably, the container filled in step b) has uniform sides and base. The container may be cylindrical, conical, rectangular, cubic, spherical.

Typically, the heated mixture is cooled quiescently or actively, preferably quiescently. Preferably the heated mixture is cooled to 20°C for storage and transport.

The embodiments described above for the product apply *mutatis mutandis* to the process as described herein.

In another aspect, the present invention relates to the use of a food composition according to any of the preceding claims to prepare a soup, sauce, gravy to season a dish.

In yet another aspect, the present invention relates to the use of 5'-ribonucleotides to structure the aqueous phase of a a savoury food composition comprising at least 50 wt.% water, by weight of the total food composition, and 10 to 40 wt.% salt, by weight of the total water content of the food composition, said 5'-ribonucleotides being selected from guanosine monophosphate (5'-GMP), adenosine monophosphate (5'-AMP), inosine monophosphate (5'-IMP), cytidine monophosphate (5'-CMP), uridine monophosphate (5'-UMP), salt of thee 5'-ribonucleotides and combinations thereof; and wherein the salt concentration by weight of the total water content is calculated using the following formula:

$$100\% \times [salt] / ([salt]+[water]),$$

wherein

[salt] represents the salt content of the food composition;
[water] represents the water content of the food composition.

**Examples**

General methods

Preparation of gels: Dry ingredients were weighed and mixed together. Water at room temperature was weighed in a pot, powder mix was stirred gently to avoid foaming in water and heated up on the stove until the mix start to boil (approx. 100°C). The hot mix was filled immediately in containers e.g. beakers or tubs, closed or sealed and left to cool to room temperature.

Samples with addition of starch were simmered for 1 min after reaching the boiling point.

$$NaCl\ concentration\ on\ water = NaCl*100/ (NaCl + water\ content)$$

Nucleotide content: The nucleotides are commercially available as disodium salts with crystal water.

As indicated below, a mixture of GMP and IMP was used (I+G), commercially available as a co-crystallized mix of disodium 5'-ribonucleotides. The components disodium-guanylate and disodium-inosinate are approximately in 1:1 ratio included. Single components disodium guanylate (sodium salt of GMP) and disodium inosinate (sodium salt of IMP) were also used separately.

The amount of pure nucleotide content was calculated based on the molecular mass without sodium or crystal water content.

The amount of inosinate monophosphate (IMP) water free and without sodium is defined with a mol mass of 348 g/mol. The nucleotide content in disodium inosinate was calculated with 67%.

The amount of guanylate monophosphate (GMP) water free and without sodium is defined with a mol mass of 363 g/mol. The nucleotide content in disodium guanylate was calculated with 68%.

The nucleotide content in I+G with a given ratio of 1:1 was calculated accordingly with 34% GMP + 33% IMP.

The nucleotide content of a commercial yeast extracts SPRINGER(R) 2020 / 0-MG-L or SPRINGER(R) 2012 / 20-MG-L-AF available from Bio Springer (indicated as containing 20 % and 12% nucleotide respectively) were analysed and found to contain 12 % and 8% nucleotide respectively, calculated as sum of 5'-GMP, 5'-IMP and 5'-AMP.

**Gel strength**

The gel strength measurement is carried out using a Texture Analyser TA - XT2 plus (Stable Micro Systems Ltd) with a finger probe of 12.7mm diameter. The sample is filled in a plastic pot (diameter 50mm, height 72mm) and closed with a lid. The finger probe penetrates the sample 20mm in depth. The gel strength corresponds to the firmness. It is the force needed at breaking point of the gel.

Measuring Program: Measuring tool: Cylindrical finger probe (12,7mm diameter)
Mode: Measure Force in Compression
Option : Return to Start
Pre - Test Speed: 1,0 mm/s
Test Speed: 0,5 mm/s
Post - Test Speed: 10 mm/s
Distance: 20 mm
Trigger Type: Auto - 0,5 g

The measurements are performed after at least 24 hours of storage at 20°C.

**Dissolution tests**

The dissolving time is determined by conductivity measurement during the dissolution of a sample. With the dissolving of ionic constituents of the sample like e.g. NaCl, MSG etc. the conductivity increases until the sample is completely dissolved. At that point no further increase in conductivity can be observed. The results are given in sec.

The sample (28g) is added to hot de-mineralised water (1000 ml) of 92°C. The conductivity during dissolving of the sample is measured until no further increase can be observed.

The conductivity of a solution depends on:

- the number and charge of ions. The more ions a solution contains, the higher its conductivity.
- the ionic mobility in a general way. The mobility in turns depends on the type of ion, the solvent (the more polar a solvent, the more completely ionized are the compounds dissolved in it. Water is an ideal solvent for ionic compounds.)
- the temperature
- the viscosity (the ionic mobility decreases with increasing viscosity, thus conductivity decreases-than a higher dissolving time can be measured)
- the application of a sample in water (sample weight / water volume)

As their name implies, non-electrolytes do not conduct the electrical current and thus do not contribute to the electrical conductivity. Such substances dissolved in water are, for example, non-ionic surfactants, sugars and suspended oils. (Metrohm Application Bulletin 102/2e). Conductivity measurement are performed with InoLab 740/ Level 3 active multifunction box with standard-conductivity cell TetraCon R 325. Data acquisition and processing are done with help of Software Multilab® Pilot V5.03.

**Evacuation method**

A tub containing a savoury composition was turned upside down on a plate to provide a free standing gel. The manner in which the savoury composition evacuates the tub was observed. In some cases, the savoury composition spontaneously moved out of the tub onto the plate. If the gel did not spontaneously move out of the tub, the tub was carefully squeezed with the finger tips from the side to help the gel to detach from the tub wall. Removal of the savoury composition was assisted in some cases by sliding a spoon tip carefully between the savoury composition and tub wall. The savoury composition detached when a gap was seen between gel and tub A positive result ("Easy evacuation") was observed when the savoury composition was removed from the tub in one piece. A negative result (lack of easy evacuation) was observed when the savoury composition_could not be detached from the tub wall. The savoury composition stuck to the tub wall and could not be removed in one piece. A negative result was also observed when the savoury composition did not form a free standing gel on the plate.

Example 1 - nucleotide+salt+water

Preparation : 300g preparation size: Dry ingredients were weighed and mixed together to provide a powder mix. Water at room temperature was weighed in a pot, powder mix was stirred in water and heated up on the stove until the mix start to boil (approx. 100°C). The evaporated water was added back. The hot mix was filled immediately in containers e.g. beakers or tubs, closed or sealed and left to cool to room temperature.

Table 1

| Ingredient | A | 1 | 2 | 3 | 4 |
|---|---|---|---|---|---|
| Water | 68 | 79.1 | 79.1 | 70.1 | 68 |
| NaCl | 17 | 19.78 | 19.78 | 14.9 | 17 |
| Disodium inosinate | 0 | 0.5 | 0 | 0 | 0 |
| Disodium guanylate | 0 | 0.5 | 1 | 0 | 0 |
| Yeast extract[1] | 0 | 0 | 0 | 0 | 15 |
| Yeast extract[2] | 0 | 0 | 0 | 15 | 0 |
| Citric acid | 0 | 0.12 | 0.12 | 0 | 0 |
| Yeast extract[3] | 15 | 0 | 0 | 0 | 0 |

(continued)

| Ingredient | A | 1 | 2 | 3 | 4 |
|---|---|---|---|---|---|
| SUM | 100 | 100 | 100 | 100 | 100 |
| Water % | 68 | 79.3 | 79.4 | 71 | 68.9 |
| NaCl % (on water) | 20 | 20 | 19.9 | 19.9 | 19.8 |
| Nucleotide % (total composition) | 0 | 0.7 | 0.7 | 1.2 | 1.8 |
| GMP % (total composition) | 0 | 0.3 | 0.7 | 0.6 | 0.8 |
| Nucleotide % (on water) | 0 | 0.8 | 0.8 | 1.7 | 2.5 |
| pH | 5.6 | 4.8 | 5.3 | 5.0 | 5.0 |
| Texture | Liquid | Gel | Gel | Gel | Gel |

[1] nucleotide enriched No.1 calculated: 12% Nucleotides based on sodium free dry matter
[2] nucleotide enriched No.2 calculated: 8% Nucleotides based on sodium free dry matter
[3] standard; nucleotide calculated: 0.2% nucleotides based on sodium free dry matter

Example 2 Salt Concentration

Preparation : 300g preparation size: Dry ingredients were weighed and mixed together to provide a powder mix. Water at room temperature was weighed in a pot, powder mix was stirred in water and heated up on the stove until the mix start to boil (approx. 100°C). The evaporated water was added back. The hot mix was filled immediately in containers e.g. beakers or tubs, closed or sealed and left to cool to room temperature.

Table 2

| Ingredient | 5 | 6 | 7 | 8 | 9 |
|---|---|---|---|---|---|
| Water | 76.5 | 88.96 | 72.3 | 68 | 63.8 |
| Salt | 8.5 | 9.86 | 12.7 | 17 | 21.2 |
| Yeast extract[1] | 15 | 0 | 15 | 15 | 15 |
| I+G | 0 | 1 | 0 | 0 | 0 |
| Citric acid | 0 | 0.18 | 0 | 0 | 0 |
| SUM | 100 | 100 | 100 | 100 | 100 |
| Water % (on total composition) | 77.4 | 89.2 | 73.2 | 68.9 | 64.7 |
| NaCl % (on water) | 10 | 10 | 15 | 20 | 25 |
| Nucleotide % (on total composition) | 1.8 | 0.7 | 1.8 | 1.8 | 1.8 |
| GMP % (total composition) | 0.8 | 0.3 | 0.8 | 0.8 | 0.8 |
| Nucleotide % (on water) | 2.3 | 0.7 | 2.4 | 2.5 | 2.7 |
| pH-value | 5.2 | 4,7 | 5.1 | 5.0 | 4.9 |
| Texture | Gel | Gel | Gel | Gel | Gel |
| Texture analyser Gel strength max force [g] at break | 24 | ND | 20 | 15 | 18 |
| Dissolving time / s | 22 | ND | 18 | 25 | 19 |

[1] nucleotide enriched No.1

Example 3 - Nucleotides combined with starch

500g preparation size: Dry ingredients were weighed and mixed together to provide a powder mix. Water at room temperature was weighed in a pot, powder mix was stirred in water and heated up on the stove until the mix start to boil (approx. 100°C) and simmered further for 1min to ensure gelatinization of starch. The evaporated water was added back. The hot mix was filled immediately in containers e.g. beakers or tubs, closed or sealed and left to cool to room temperature.

Table 3

| Ingredients | 10 | 11 | 12 | 13 | 14 | 15 | 16 | 17 | 18 |
|---|---|---|---|---|---|---|---|---|---|
| Water | 69.52 | 68.59 | 67.56 | 69.52 | 68.59 | 67.71 | 69.52 | 68.59 | 67.71 |
| Salt | 14.8 | 14.58 | 14.26 | 14.8 | 14.58 | 14.29 | 14.8 | 14.58 | 14.29 |
| Yeast extract[2] | 14.68 | 14.68 | 14.68 | 14.68 | 14.68 | 15.00 | 14.68 | 14.68 | 15.00 |
| Potato starch | 1.0 | 2.15 | 3.50 | 0 | 0 | 0 | 0 | 0 | 0 |
| Corn starch | 0 | 0 | 0 | 0 | 0 | 0 | 1 | 2.15 | 3.00 |
| Pea starch | 0 | 0 | 0 | 1.0 | 2.15 | 3.00 | 0 | 0 | 0 |
| SUM | 100 | 100 | 100 | 100 | 100 | 100 | 100 | 100 | 100 |
| Water % (on total composition) | 70.5 | 69.7 | 68.8 | 70.6 | 69.8 | 69.0 | 70.6 | 69.8 | 69.0 |
| NaCl % (on water) | 17.3 | 17.3 | 17.2 | 17.3 | 17.3 | 17.1 | 17.3 | 17.3 | 17.1 |
| Nucleotide % (total composition) | 1.2 | 1.2 | 1.2 | 1.2 | 1.2 | 1.2 | 1.2 | 1.2 | 1.2 |
| Nucleotide % (on water) | 1.7 | 1.7 | 1.7 | 1.7 | 1.7 | 1.7 | 1.7 | 1.7 | 1.7 |
| pH-value | 4.9 | 4.9 | 4.9 | 4.9 | 4.9 | 4.9 | 4.9 | 5.0 | 5.0 |
| Texture | Gel | Gel | Gel | Gel | Gel | Gel | Gel | Gel | Gel |
| Texture analyser Gel strength max force [g] at break | 15 | 30 | 57 | 12 | 31 | 44 | 9 | 24 | 41 |
| Dissolving time / s | 58 | 88 | 88 | 42 | 83 | 88 | 36 | 62 | 64 |
| Easy evacuation | Yes | Yes | Yes | Yes | Yes | Yes | Yes | Yes | Yes |
| [2]nucleotide enriched No.2* | | | | | | | | | |

Table 3 contd.

| Ingredients | 19 | B | C |
|---|---|---|---|
| Water | 68.59 | 68 | 78.3 |
| Salt | 14.58 | 17 | 19.5 |
| Yeast extract[1] | 14.68 | 0 | 0 |
| Yeast extract[2] | 0 | 15 | 0 |
| potato starch | 2.15 | 0 | 2.2 |
| SUM | 100 | 100 | 100 |
| Water % (total composition) | 69.7 | 68.9 | 78.5 |
| NaCl % (on water) | 19.8 | 19.8 | 19.9 |
| Nucleotide % (total composition) | 1.2 | 0.0 | 0.0 |
| GMP % (total composition) | 0.6 | 0 | 0 |
| Nucleotide % (on water) | 1.7 | 0 | 0 |
| pH-value | 4.9 | 5.6 | 6.7 |
| Texture | Gel | Liquid | Liquid |

(continued)

| Ingredients | 19 | B | C |
|---|---|---|---|
| Texture analyser Gel strength max force [g] at break | 30 | n.a. | n.a. |
| Dissolving time / s | 88 | n.a. | n.a. |
| Easy evacuation | yes | n.a. | n.a. |

[1] nucleotide enriched No.2
[2] standard; nucleotide calculated: 0.2% nucleotides based on sodium free dry matter

Example 4 nucleotide + gum

300g preparation size: Dry ingredients were weighed and mixed together to provide a powder mix. Water at room temperature was weighed in a pot, powder mix was stirred in water and heated up on the stove until the mix start to boil (approx. 100°C) and simmered further for 1min. The evaporated water was added back. The hot mix was filled immediately in containers e.g. beakers or tubs, closed or sealed and left to cool to room temperature.

Table 4

| Ingredients | 20 | 21 | 22 |
|---|---|---|---|
| Water | 78.39 | 78.39 | 79.18 |
| Salt | 19.54 | 19.54 | 19.74 |
| Citric acid anhydrous | 0.12 | 0.12 | 0.12 |
| IG | 0.95 | 0.95 | 0.96 |
| Locust bean gum | 1 | 0 | 0 |
| Guar gum | 0 | 1 | 0 |
| SUM | 100 | 100 | 100 |
| Water % (total composition) | 78.8 | 78.8 | 79.5 |
| NaCl % (on water) | 19.9 | 19.9 | 19.9 |
| GMP % (total composition) | 0.3 | 0.3 | 0.3 |
| Nucleotide % (on water) | 0.8 | 0.8 | 0.8 |
| pH-value | 4.7 | 4.7 | 4.7 |
| Texture | gel | gel | Gel |

Example 5 - Beef gel

500g preparation size: Dry ingredients were weighed and mixed together to provide a powder mix. Beef extract was weighed was weighed in a pot, water at room temperature was added, powder mix was stirred in and heated up on the stove until the mix start to boil (approx. 100°C) and simmered further for 1min to ensure gelatinization of starch. The evaporated water was added back. The hot mix was filled immediately in containers e.g. beakers or tubs, closed or sealed and left to cool to room temperature.

Table 5

| Ingredients | 23 | 24 | 25 | 26 | 27 | 28 | 29 | D | E | F |
|---|---|---|---|---|---|---|---|---|---|---|
| Water | 65.20 | 65.19 | 65.20 | 60.00 | 55.71 | 65.10 | 55.71 | 55.71 | 55.71 | 55.71 |
| Salt | 12.60 | 12.60 | 12.60 | 17.80 | 18.57 | 12.58 | 18.57 | 18.57 | 18.57 | 18.57 |
| Potassium Chloride | 1.79 | 1.79 | 1.79 | 1.79 | 1.79 | 1.78 | 1.79 | 1.79 | 1.79 | 1.79 |

(continued)

| Ingredients | 23 | 24 | 25 | 26 | 27 | 28 | 29 | D | E | F |
|---|---|---|---|---|---|---|---|---|---|---|
| Beef extract paste 65%DS | 2.20 | 2.20 | 2.20 | 2.20 | 2.20 | 2.20 | 2.20 | 2.20 | 2.20 | 2.20 |
| Flavouring/colo uring | 3.08 | 3.08 | 3.08 | 3.08 | 3.08 | 3.08 | 3.08 | 3.08 | 3.08 | 3.08 |
| Sucrose | 1.00 | 0.46 | 1.00 | 1.00 | 1.00 | 1.00 | 1.00 | 4.19 | 4.39 | 6.47 |
| Herbs | 0.21 | 0.21 | 0.21 | 0.21 | 0.21 | 0.21 | 0.21 | 0.21 | 0.21 | 0.21 |
| Yeast extract[1] | 11.96 | 11.96 | 11.96 | 11.96 | 0 | 12.55 | 0 | 0.00 | 0.00 | 11.96 |
| Yeast extract[2] | 0 | 0 | 0 | 0 | 13.43 | 0 | 14.04 | 14.04 | 14.04 | 0 |
| Disodium guanylate | 0 | 0 | 0 | 0 | 0.94 | 0 | 0.60 | 0.10 | 0 | 0 |
| Disodium inosinate | 0 | 0 | 0 | 0 | 1.10 | 0 | 0.83 | 0.10 | 0 | 0 |
| Potato starch | 1.96 | 2.5 | 0 | 0 | 0 | 1.50 | 0 | 0 | 0 | 0 |
| Corn starch | 0 | 0 | 1.96 | 1.96 | 1.96 | 0 | 1.96 | 0 | 0 | |
| SUM | 100 | 100 | 100 | 100 | 100 | 100 | 100 | 100 | 100 | 100 |
| Water % (total composition) | 67 | 67 | 67 | 62 | 58 | 67 | 58 | 58 | 58 | 57 |
| NaCl % (on water) | 16 | 16 | 16 | 23 | 24 | 16 | 25 | 25 | 25 | 25 |
| Nucleotide % (total composition) | 1.4 | 1.4 | 1.4 | 1.4 | 1.4 | 1.5 | 1.0 | 0.1 | 0.0 | 1.4 |
| GMP % (total composition) | 0,6 | 0,6 | 0,6 | 0,6 | 0,6 | 0,6 | 0,4 | 0,1 | 0,0 | 0,6 |
| Nucleotide % (on water) | 2.1 | 2.1 | 2.1 | 2.3 | 2.3 | 2.2 | 1.7 | 0.2 | 0 | 2.4 |
| pH-value | 5.0 | 4.9 | 5.0 | 4.8 | 5.5 | 5.0 | 5.4 | 5.1 | 5.1 | 4.8 |
| Texture | Gel | Gel | Gel | Gel | Gel | Gel | Gel | Liquid | Liquid | Gel |
| Texture analyser Gel strength max force [g] at break | 57 | 56 | 49 | 49 | 76 | 44 | 19 | n.a. | n.a. | 14 |
| Dissolving time | 75 | 82 | 62 | 91 | 106 | 54 | 78 | n.a. | n.a. | 19 |
| Easy evacuation | yes | yes | yes | yes | yes | yes | yes | n.a. | n.a. | No |

[1] nucleotide enriched No.1
[2] standard

## Claims

1. A food composition in the form of a gel comprising a structured aqueous phase containing 5'-ribonucleotides and salt, the food composition comprising:

    a) at least 50 wt.% water, by weight of the total food composition;
    b) 10 to 40 wt.% salt, by weight of the total water content of the food composition; preferably wherein the salt is selected from NaCl, KCl and mixtures thereof, and wherein the salt concentration by weight of the total water content is calculated using the following formula:

$$100\% \times [\text{salt}] / ([\text{salt}]+[\text{water}]),$$

wherein

[salt] represents the salt content of the food composition;
[water] represents the water content of the food composition;

c) 0.5 to 5 wt.% 5'-ribonucleotides, by weight of the total food composition, said 5'-ribonucleotides being selected from guanosine monophosphate (5'-GMP), adenosine monophosphate (5'-AMP), inosine monophosphate (5'-IMP), cytidine monophosphate (5'-CMP), uridine monophosphate (5'-UMP), salt of thee 5'-ribonucleotides and combinations thereof;
d) 0 to 50 wt.% taste imparting components from the group consisting of plant pieces, vegetable pieces, meat particulates and combinations thereof,

wherein the food composition has a pH less than 7.

2. Food composition according to claim 1, wherein the 5'-ribonucleotides comprise at least 0.25 wt.% guanosine monophosphate.

3. Food composition according to claim 1 or 2, wherein 5-ribonucleotides are provided by yeast extract or seaweed extract, preferably a yeast extract, more preferably wherein the yeast extract comprises at least 8 wt.% nucleotides by weight of dry matter of the yeast extract, even more preferably wherein the yeast extract comprises at least 3 wt.% guanosine monophosphate, by weight of dry matter of the yeast extract.

4. Food composition according to any of the preceding claims, wherein the food composition has a pH in the range of 3.5 to 7, preferably in the range of 4 to 6.5, even more preferably in the range 5 to 6.

5. Food composition according to any of the preceding claims, wherein the food composition comprises 5 to 40 wt.% yeast extract, preferably 10 to 30 wt.%, even more preferably 12 to 25 wt.%, yeast extract, by weight of the total composition.

6. Food composition according to any of the preceding claims, wherein the food composition comprises less than 0.1 wt.% xanthan gum, by weight of the total food composition, preferably less than 0.05 wt.% xanthan gum, by weight of the total food composition.

7. Food composition according to any of the preceding claims, comprising 0.5 to 5 wt.% gelatinized starch component by weight of the total water content of the food composition, preferably 1 to 4.5 wt.% gelatinized starch component by weight of the total water content of the food composition, more preferably 2 to 4 wt.% gelatinized starch component by weight of the total water content of the food composition, preferably wherein the gelatinized starch component is a native starch preferably selected from the group consisting of potato starch, corn starch or pea starch.

8. Food composition according to any of the previous claims, comprising 0.5 to 30 wt.% ungelatinized starch component by weight of the total water content of the food composition.

9. Food composition according to any of the preceding claims, comprising less than 1 wt.% monosodium glutamate, preferably less than 0.5 wt.% monosodium glutamate.

10. Food composition according to any of the preceding claims, comprising a 0.1 to 3 wt.% galactomannan and/or glucomannan, preferably wherein the galactomannan is locust bean gum or guar gum.

11. Food composition according to any of the preceding claims, wherein the food composition has a firmness of above 20 g, preferably above 30 g, more preferably above 50 g, preferably less than 1000 g, more preferably less than 500 g, more preferably less than 350 g, said firmness being equal to the force needed at breaking point of the gel, and being determined by penetrating a sample of the food composition, after at least 24 hours of storage at 20°C, up to a depth or 20 mm with a probe of 12.7 mm diameter at a speed of 0.5 mm/s, employing the 'Gel strength measurement' method as described herein.

12. Food composition according to any of the preceding claims, wherein the food composition is a packaged composition, preferably having a mass in the range of 5 to 1000g, preferably, 10 to 800 g, more preferably 25 to 600 g, even more preferably 50 to 500 g, preferably wherein the packaged food composition is packaged in a container, said container preferably being containing multiple portions or a single portion, preferably said container being a single portion container.

13. Use of a food composition according to any of the preceding claims to prepare a soup, sauce, gravy to season a dish.

14. Process for the preparation of a food composition according to any one of claims 1-12, said process comprising:

a) providing water, salt and 5-ribonucleotides or a source thereof and optionally combining these with other food ingredients, said 5'-ribonucleotides being selected from guanosine monophosphate (5'-GMP), adenosine monophosphate (5'-AMP), inosine monophosphate (5'-IMP), cytidine monophosphate (5'-CMP), uridine monophosphate (5'-UMP), salt of thee 5'-ribonucleotides and combinations thereof,
b) heating the mixture,
c) filling the mixture in a container.

15. Use of 5'-ribonucleotides to structure the aqueous phase of a savoury food composition comprising at least 50 wt.% water, by weight of the total food composition, and 10 to 40 wt.% salt, by weight of the total water content of the food composition, said 5'-ribonucleotides being selected from guanosine monophosphate (5'-GMP), adenosine monophosphate (5'-AMP), inosine monophosphate (5'-IMP), cytidine monophosphate (5'-CMP), uridine monophosphate (5'-UMP), salt of the 5'-ribonucleotides and combinations thereof; and wherein the salt concentration by weight of the total water content is calculated using the following formula:

$$100\% \times [salt] / ([salt]+[water]),$$

wherein

[salt] represents the salt content of the food composition;
[water] represents the water content of the food composition.

**Patentansprüche**

1. Lebensmittelzusammensetzung in Form eines Gels, umfassend eine strukturierte wässrige Phase, die 5'-Ribonucleotide und Salz enthält, wobei die Lebensmittelzusammensetzung umfasst:

a) mindestens 50 Gew.-% Wasser, bezogen auf das Gewicht der gesamten Lebensmittelzusammensetzung;
b) 10 bis 40 Gew.-% Salz, bezogen auf das Gewicht des Gesamtwassergehalts der Lebensmittelzusammensetzung, wobei das Salz vorzugsweise aus NaCl, KCl und Mischungen davon ausgewählt ist und wobei die Salzkonzentration, bezogen auf das Gewicht des Gesamtwassergehaltes, unter Verwendung der folgenden Formel berechnet wird:

$$100\% \times [Salz] / ([Salz]+[Wasser]),$$

worin

[Salz] den Salzgehalt der Lebensmittelzusammensetzung darstellt;
[Wasser] den Wassergehalt der Lebensmittelzusammensetzung darstellt;

c) 0,5 bis 5 Gew.-% 5'-Ribonucleotide, bezogen auf das Gewicht der gesamten Lebensmittelzusammensetzung, wobei die 5'-Ribonucleotide aus Guanosinmonophosphat (5'-GMP), Adenosinmonophosphat (5'-AMP), Inosinmonophosphat (5'-IMP), Cytidinmonophosphat (5'-CMP), Uridinmonophosphat (5'-UMP), Salz der 5'-Ribonucleotide und Kombinationen davon ausgewählt sind;
d) 0 bis 50 Gew.-% geschmacksverleihende Komponente aus der Gruppe, bestehend aus Pflanzenstücken, Gemüsestücken, Fleischpartikeln und Kombinationen davon,

wobei die Lebensmittelzusammensetzung einen pH-Wert von weniger als 7 aufweist.

2. Lebensmittelzusammensetzung nach Anspruch 1, wobei die 5'-Ribonucleotide mindestens 0,25 Gew.-% Guanosinmonophosphat umfassen.

3. Lebensmittelzusammensetzung nach Anspruch 1 oder 2, wobei 5'-Ribonucleotide durch Hefeextrakt oder Algenextrakt, vorzugsweise durch einen Hefeextrakt, bereitgestellt werden, wobei der Hefeextrakt bevorzugter mindestens 8 Gew.-% Nucleotide, bezogen auf das Gewicht der Trockensubstanz des Hefeextrakts, umfasst, sogar bevorzugter der Hefeextrakt mindestens 3 Gew.-% Guanosinmonophosphat, bezogen auf das Gewicht der Trockensubstanz des Hefeextrakts, umfasst.

4. Lebensmittelzusammensetzung nach irgendeinem der vorhergehenden Ansprüche, wobei die Lebensmittelzusammensetzung einen pH-Wert in dem Bereich von 3,5 bis 7, vorzugsweise in dem Bereich von 4 bis 6,5, sogar bevorzugter in dem Bereich von 5 bis 6 aufweist.

5. Lebensmittelzusammensetzung nach irgendeinem der vorhergehenden Ansprüche, wobei die Lebensmittelzusammensetzung 5 bis 40 Gew.-% Hefeextrakt, vorzugsweise 10 bis 30 Gew.-%, sogar bevorzugter 12 bis 25 Gew.-% Hefeextrakt, bezogen auf das Gewicht der gesamten Zusammensetzung, umfasst.

6. Lebensmittelzusammensetzung nach irgendeinem der vorhergehenden Ansprüche, wobei die Lebensmittelzusammensetzung weniger als 0,1 Gew.-% Xanthangummi, bezogen auf das Gewicht der gesamten Lebensmittelzusammensetzung, vorzugsweise weniger als 0,05 Gew.-% Xanthangummi, bezogen auf das Gewicht der gesamten Lebensmittelzusammensetzung, umfasst.

7. Lebensmittelzusammensetzung nach irgendeinem der vorhergehenden Ansprüche, umfassend 0,5 bis 5 Gew.-% gelatinierte Stärkekomponente, bezogen auf das Gewicht des Gesamtwassergehalts der Lebensmittelzusammensetzung, vorzugsweise 1 bis 4,5 Gew.-% gelatinierte Stärkekomponente, bezogen auf das Gewicht des Gesamtwassergehalts der Lebensmittelzusammensetzung, bevorzugter 2 bis 4 Gew.-% gelatinierte Stärkekomponente, bezogen auf das Gewicht des Gesamtwassergehalts der Lebensmittelzusammensetzung, wobei die gelatinierte Stärkekomponente vorzugsweise eine native Stärke ist, die vorzugsweise aus der Gruppe, bestehend aus Kartoffelstärke, Maisstärke oder Erbsenstärke, ausgewählt ist.

8. Lebensmittelzusammensetzung nach irgendeinem der vorhergehenden Ansprüche, umfassend 0,5 bis 30 Gew.-% ungelatinierte Stärkekomponente, bezogen auf das Gewicht des Gesamtwassergehalts der Lebensmittelzusammensetzung.

9. Lebensmittelzusammensetzung nach irgendeinem der vorhergehenden Ansprüche, umfassend weniger als 1 Gew.-% Mononatriumglutamat, vorzugsweise weniger als 0,5 Gew.-% Mononatriumglutamat.

10. Lebensmittelzusammensetzung nach irgendeinem der vorhergehenden Ansprüche, umfassend 0,1 bis 3 Gew.-% Galactomannan und/oder Glucomannan, wobei das Galactomannan vorzugsweise Johannisbrotkernmehl oder Guarkernmehl ist.

11. Lebensmittelzusammensetzung nach irgendeinem der vorhergehenden Ansprüche, wobei die Lebensmittelzusammensetzung eine Festigkeit von über 20 g, vorzugsweise über 30 g, bevorzugter über 50 g, vorzugsweise weniger als 1000 g, bevorzugter weniger als 500 g, bevorzugter weniger als 350 g aufweist, wobei die Festigkeit gleich der Kraft ist, die am Bruchpunkt des Gels erforderlich ist und die durch Penetration einer Probe der Lebensmittelzusammensetzung nach mindestens 24 Stunden Lagerung bei 20°C bis zu einer Tiefe von 20 mm mit einer Sonde von 12,7 mm Durchmesser bei einer Geschwindigkeit von 0,5 mm/s bestimmt wird, wobei die hierin aufgeführte ,Gel strength measurement' Messmethode angewandt wird.

12. Lebensmittelzusammensetzung nach irgendeinem der vorhergehenden Ansprüche, wobei die Lebensmittelzusammensetzung eine verpackte Zusammensetzung ist, vorzugsweise mit einer Masse in dem Bereich von 5 bis 1000 g, vorzugsweise von 10 bis 800 g, bevorzugter von 25 bis 600 g, sogar bevorzugter von 50 bis 500 g, wobei die verpackte Lebensmittelzusammensetzung in einem Behälter verpackt ist, wobei der Behälter vorzugsweise mehrere Portionen oder eine Einzelportion enthält, wobei der Behälter vorzugsweise ein Einzelportionsbehälter ist.

13. Verwendung einer Lebensmittelzusammensetzung nach irgendeinem der vorhergehenden Ansprüche zur Zubereitung einer Suppe, einer Soße und einer Soße zum Würzen eines Gerichts.

**14.** Verfahren zur Herstellung einer Lebensmittelzusammensetzung nach irgendeinem der Ansprüche 1-12, wobei das Verfahren umfasst:

a) Bereitstellen von Wasser, Salz und 5'-Ribonucleotiden oder einer Quelle davon und gegebenenfalls deren Kombinieren mit anderen Lebensmittelzutaten, wobei die 5'-Ribonucleotide aus Guanosinmonophosphat (5'-GMP), Adenosinmonophosphat (5'-AMP), Inosinmonophosphat (5'-IMP), Cytidinmonophosphat (5'-CMP), Uridinmonophosphat (5'-UMP), Salz der 5'-Ribonucleotide und Kombinationen davon ausgewählt sind,
b) Erhitzen der Mischung,
c) Abfüllen der Mischung in einen Behälter.

**15.** Verwendung von 5'-Ribonucleotiden zur Strukturierung der wässrigen Phase einer wohlschmeckenden Lebensmittelzusammensetzung, umfassend mindestens 50 Gew.-% Wasser, bezogen auf das Gewicht der gesamten Lebensmittelzusammensetzung, und 10 bis 40 Gew.-% Salz, bezogen auf das Gewicht des Gesamtwassergehalts der Lebensmittelzusammensetzung, wobei die 5'-Ribonucleotide aus Guanosinmonophosphat (5'-GMP), Adenosinmonophosphat (5'-AMP), Inosinmonophosphat (5'-IMP), Cytidinmonophosphat (5'-CMP), Uridinmonophosphat (5'-UMP), Salz der 5'-Ribonucleotide und Kombinationen davon ausgewählt sind und wobei die Salzkonzentration, bezogen auf das Gewicht des Gesamtwassergehalts, unter Verwendung der folgenden Formel berechnet wird:

$$100\% \times [\text{Salz}] / ([\text{Salz}]+[\text{Wasser}]),$$

worin

[Salz] den Salzgehalt der Lebensmittelzusammensetzung darstellt;
[Wasser] den Wassergehalt der Lebensmittelzusammensetzung darstellt.

**Revendications**

**1.** Composition alimentaire dans la forme d'un gel comprenant une phase aqueuse structurée contenant des 5'-ribonucléotides et un sel, la composition alimentaire comprenant :

a) au moins 50 % en masse d'eau, en masse de la composition alimentaire totale ;
b) 10 à 40 % en masse de sel, en masse de la teneur totale en eau de la composition alimentaire ; dans laquelle de préférence le sel est choisi parmi NaCl, KCl et des mélanges de ceux-ci, et dans laquelle la concentration en sel en masse de la teneur totale en eau est calculée en utilisant la formule suivante :

$$100\ \% \times [\text{sel}]/([\text{sel}] + [\text{eau}]),$$

dans laquelle

[sel] représente la teneur en sel de la composition alimentaire ;
[eau] représente la teneur en eau de la composition alimentaire ;

c) 0,5 à 5 % en masse de 5'-ribonucléotides, en masse de la composition alimentaire totale, lesdits 5'-ribonucléotides étant choisis parmi le monophosphate de guanosine (5'-GMP), monophosphate d'adénosine (5'-AMP), monophosphate d'inosine (5'-IMP), monophosphate de cytidine (5'-CMP), monophosphate d'uridine (5'-UMP), sel de ces 5'-ribonucléotides et combinaisons de ceux-ci ;
d) 0 à 50 % en masse de constituants communiquant du goût du groupe consistant en morceaux de plantes, morceaux de légumes, particules de viande et combinaisons de ceux-ci,

dans laquelle la composition alimentaire présente un pH inférieur à 7.

**2.** Composition alimentaire selon la revendication 1, dans laquelle les 5'-ribonucléotides comprennent au moins 0,25 % en masse de monophosphate de guanosine.

3. Composition alimentaire selon la revendication 1 ou 2, dans laquelle les 5-ribonucléotides sont fournis par extrait de levure ou extrait d'algue, de préférence un extrait de levure, encore mieux dans laquelle l'extrait de levure comprend au moins 8 % en masse de nucléotides en masse de matière sèche de l'extrait de levure, bien mieux encore dans laquelle l'extrait de levure comprend au moins 3 % en masse de monophosphate de guanosine, en masse de matière sèche de l'extrait de levure.

4. Composition alimentaire selon l'une quelconque des revendications précédentes, dans laquelle la composition alimentaire présente un pH dans l'intervalle de 3,5 à 7, de préférence dans l'intervalle de 4 à 6,5, encore mieux dans l'intervalle de 5 à 6.

5. Composition alimentaire selon l'une quelconque des revendications précédentes, dans laquelle la composition alimentaire comprend de 5 à 40 % en masse d'extrait de levure, de préférence de 10 à 30 % en masse, encore mieux de 12 à 25 % en masse, d'extrait de levure, en masse de la composition totale.

6. Composition alimentaire selon l'une quelconque des revendications précédentes, dans laquelle la composition alimentaire comprend moins de 0,1 % en masse de gomme xanthane, en masse de la composition alimentaire totale, de préférence moins de 0,05 % en masse de gomme xanthane, en masse de la composition alimentaire totale.

7. Composition alimentaire selon l'une quelconque des revendications précédentes, comprenant de 0,5 à 5 % en masse de constituant d'amidon gélatinisé en masse de la teneur totale en eau de la composition alimentaire, de préférence de 1 à 4,5 % en masse de constituant d'amidon gélatinisé en masse de la teneur totale en eau de la composition alimentaire, encore mieux de 2 à 4 % en masse de constituant d'amidon gélatinisé en masse de la teneur totale en eau de la composition alimentaire, de préférence dans laquelle le constituant d'amidon gélatinisé est un amidon natif choisi de préférence dans le groupe consistant en amidon de pomme de terre, amidon de maïs ou amidon de pois.

8. Composition alimentaire selon l'une quelconque des revendications précédentes, comprenant de 0,5 à 30 % en masse de constituant d'amidon non gélatinisé en masse de la teneur totale en eau de la composition alimentaire.

9. Composition alimentaire selon l'une quelconque des revendications précédentes, comprenant moins de 1 % en masse de glutamate de monosodium, de préférence moins de 0,5 % en masse de glutamate de monosodium.

10. Composition alimentaire selon l'une quelconque des revendications précédentes, comprenant de 0,1 à 3 % en masse de galactomannane et/ou glucomannane, de préférence dans laquelle le galactomannane est de la gomme de caroube ou de la gomme guar.

11. Composition alimentaire selon l'une quelconque des revendications précédentes, dans laquelle la composition alimentaire présente une fermeté supérieure à 20 g, de préférence supérieure à 30 g, encore mieux supérieure à 50 g, de préférence inférieure à 1 000 g, encore mieux inférieure à 500 g, bien mieux encore inférieure à 350 g, ladite fermeté étant égale à la force nécessaire au point de rupture du gel, et étant déterminée par pénétration d'un échantillon de la composition alimentaire, après au moins 24 heures de stockage à 20°C, jusqu'à une profondeur de 20 mm avec une sonde de diamètre 12,7 mm à une vitesse de 0,5 mm/s, en utilisant la méthode "mesure de résistance de gel" comme décrite ici.

12. Composition alimentaire selon l'une quelconque des revendications précédentes, dans laquelle la composition alimentaire est une composition emballée, ayant de préférence une masse dans l'intervalle de 5 à 1 000 g, de préférence, 10 à 800 g, encore mieux 25 à 600 g, bien mieux encore 50 à 500 g, de préférence dans laquelle la composition alimentaire emballée est emballée dans un récipient, ledit récipient contenant de préférence des portions multiples ou une seule portion, de préférence ledit récipient étant un récipient à une seule portion.

13. Utilisation d'une composition alimentaire selon l'une quelconque des revendications précédentes pour préparer une soupe, une sauce, un jus de viande pour assaisonner un plat.

14. Procédé pour la préparation d'une composition alimentaire selon l'une quelconque des revendications 1-12, ledit procédé comprenant :

   a) la fourniture d'eau, de sel et de 5-ribonucléotides ou d'une source de ceux-ci et éventuellement la combinaison de ceux-ci avec d'autres ingrédients alimentaires, lesdits 5'-ribonucléotides étant choisis parmi le monophosphate de guanosine (5'-GMP), monophosphate d'adénosine (5'-AMP), monophosphate d'inosine (5'-IMP), monophosphate de cytidine (5'-CMP), monophosphate d'uridine (5'-UMP), sel de ces 5'-ribonucléotides et combinaisons de ceux-ci,

b) le chauffage du mélange,

c) la charge du mélange dans un récipient.

15. Utilisation de 5'-ribonucléotides pour structurer la phase aqueuse d'une composition alimentaire savoureuse comprenant au moins 50 % en masse d'eau, en masse de la composition alimentaire totale, et de 10 à 40 % en masse de sel, en masse de la teneur totale en eau de la composition alimentaire, lesdits 5'-ribonucléotides étant choisis parmi le monophosphate de guanosine (5'-GMP), monophosphate d'adénosine (5'-AMP), monophosphate d'inosine (5'-IMP), monophosphate de cytidine (5'-CMP), monophosphate d'uridine (5'-UMP), sel des 5'-ribonucléotides et combinaisons de ceux-ci ; et dans laquelle la concentration en sel en masse de la teneur totale en eau est calculée en utilisant la formule suivante :

$$100 \% \times [\text{sel}]/([\text{sel}] + [\text{eau}]),$$

dans laquelle

[sel] représente la teneur en sel de la composition alimentaire ;

[eau] représente la teneur en eau de la composition alimentaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61031068 A
- WO 2007068484 A
- WO 2007068482 A
- WO 2008151850 A
- WO 2008151851 A
- WO 08151852 A
- WO 2012062919 A
- WO 2007068402 A
- WO 2007068483 A
- WO 2O12084843 A
- WO 2014009079 A
- WO 2008151854 A